# EUROPEAN PATENT APPLICATION

(11) **EP 2 712 948 A1**
(43) Date of publication of application: **02.04.2014**
(21) Application number: 13186945.5
(22) Date of filing: 01.10.2013
(51) Int. Cl.: D04H 1/02, B32B 5/26, C09K 3/32, D04H 1/04, D04H 1/425, D04H 1/4274, D04H 1/541, D04H 1/72, D04H 5/06

(54) **Nonwoven product for use as industrial absorbent with cellulose and dual-layer scrim**

(30) Priority: 01.10.2012 US 201213633059
(71) Applicant: Sellars Absorbent Materials, Inc., Milwaukee, WI 53223 (US)
(72) Inventor: Perry, William D, Milwaukee, WI Wisconsin 53223 (US); Drapela, David C, Brown Deer, WI Wisconsin 53223 (US)
(74) Representative: Garratt, Peter Douglas

(57) **Abstract**

A non-woven industrial absorbent with at least one dual-layer outer scrim. The absorbent includes a core made of cellulose material and bicomponent fibers and has first and second surfaces. A scrim is bonded to at least one of the surfaces. The scrim includes a first layer, the function of which is to adhere to the core, and a second layer, whose function is to provide enhanced grip. The product may be made by processing cellulose to a suitable size, optionally applying a liquid fire-retardant to the cellulose, drying and mixing the cellulose with a thermoplastic bonding agent, and depositing the material onto a belt to produce a web. Subsequent processing of the web softens or melts the bonding agent, thereby adhering it to other web material and giving the web strength and integrity. The one or more scrims or an optional netting provide additional strength or particular surface characteristics.

## Description

### BACKGROUND

Non-woven fabrics or products are used for a variety of purposes, but in many instances are used as absorbents. A common paper towel is one example of a non-woven absorbent that is used for cleaning and picking up spilled liquids. Industrial absorbents are used for similar purposes, but are designed for use in industrial environments. For example, non-woven absorbent pads are often used in manufacturing facilities to absorb water, oil, chemicals, and other liquids that may be dispensed, emitted, or leaked from various machines and manufacturing lines.

### SUMMARY

Although current industrial absorbents are functional, industrial absorbents with improved characteristics would be beneficial. One characteristic that can be important to buyers and users of industrial absorbents is grip. Absorbents are often placed on floors or other areas where they may be stepped or walked on. Absorbents may be placed in such locations in anticipation of unwanted spills or leaks. Regardless of why or when an industrial absorbent is placed on a floor, it is important that the absorbent stay in position in order to soak up the liquid of interest. It is also important from a safety perspective that the absorbent resist moving in response to a person walking or stepping on the absorbent. If the absorbent moves when stepped or walked on, it is possible that the person stepping or walking on the absorbent may slip or fall. Either event could cause the person to be injured or knock into and damage other items.

In one embodiment, the invention provides a non-woven product for use as an industrial absorbent. The product includes a non-woven web core. The core includes a first surface, a second surface opposite the first surface, and a mixture of cellulose and bicomponent fibers. The cellulose includes at least one of scrap and recycled cellulose. The cellulose can be selected from at least one of a group of sources including a source of post-industrial cellulose and a source of post-consumer cellulose. Preferably, opened, individuated bicomponent fibers are mixed with the cellulose, and at least some of the bicomponent fibers are thermally bonded to at least some of the cellulose. Thus, the bicomponent fibers act as the thermal bonding agent. The non-woven product also includes a scrim.

The scrim has a first layer including spunbond, thermoplastic material and a second layer including meltblown material. The first layer of the scrim is thermally bonded to either the first surface or the second surface of the core. The second layer (of meltblown material) exhibits higher grip than the spunbond material and the scrim is positioned so that the second layer (the layer including the meltblown material) is positioned at the outer side or exterior surface of the product.

In certain embodiments, the cellulose in the core is treated with a liquid fire retardant. The cellulose used to form the core may consist of fibers and particles that vary in size over a wide range, from that of fines (short, individuated fibers) to particles (or pieces) with an area equal to that of a ¼" square or slightly larger. The core is a thermally bonded web of cellulose particles and bicomponent fibers, produced with an amount of compression sufficient to ensure web integrity, without causing an undesirable increase in density. Typically, the web's absorbency and thermal insulating properties vary inversely with its physical density. The amount of bicomponent fiber combined with the cellulose is sufficient to obtain the required web strength (typically 8% to 10% of total web weight), but also limited to allow the web to rebound after thermal bonding or compression processes in order to prevent excessive loss of bulk.

As noted above, one layer in the scrim is made from a material, which during the web bonding process becomes adhered to at least some of the cellulose in the core along one surface of the web, and to at least some of the bicomponent fiber in the core along the same surface. The result is a product with greater tensile strength than one without an outer scrim, and one with some degree of scuff resistance on the scrim side. The second layer of the scrim, which is made from meltblown material, is adhered to the first layer. The second layer is positioned outwardly or on an exterior surface of the product and enhances the grip of the product. In particular, the level of grip between the meltblown material and a surface such as a floor, is greater than a product that, for example, has an outer scrim made only from spunbond material. The first layer of the scrim bonds to the absorbent core and to the meltblown material of the second layer.

In still another embodiment, the product includes an outer scrim on both surfaces of the core. The scrims on each surface may be identical to one another (for example, both two-layer scrims with one layer of spunbond materials and a second layer of meltblown material). Alternatively, one of the scrims is a single layer of spunbond or other thermoplastic material while the other scrim has two layers as described above.. The result is a product with some degree of scuff resistance on both sides and greater tensile strength than one with one or no outer scrim.

In still another embodiment, the invention provides an industrial absorbent that includes a layer of netting material either embedded within, or attached to one surface of the core. To embed the netting either in whole or in part, the absorbent core of cellulose (which may be treated with a liquid fire retardant) and bicomponent fibers is produced so as to allow some amount of web material to pass through the open netting during web formation. In particular, the netting is positioned below the forming head and for some distance above the forming wire such that a portion of the web material falls through the netting during web formation, thereby embedding the netting to some extent within the web. This enables the bicomponent fibers to bond the netting to the web to provide good surface bonding over the entire surface of the pad. Some of the netting is visible on the surface to the naked eye through the fibers, whereas some of the netting is not visible on the surface. Alternatively, it is also possible to attached or adhere the netting material to a surface of the web after formation.

When netting is used, the result is a web with greater tensile strength than one with neither netting nor scrim, but with fewer changes to surface characteristics than the changes typically associated with the addition of a scrim.

Another embodiment of the invention provides a method of manufacturing a non-woven, industrial absorbent from at least one type of cellulose selected from a group of sources including post-industrial cellulose, and post-consumer cellulose. The cellulose is shredded, declumped, and sized (reduced to suitable particle sizes), and then optionally metered into a spray chamber where a liquid fire-retardant is applied to the cellulose. The method also includes drying the cellulose, combining the cellulose with bicomponent fiber, and then further sizing of the cellulose to a range of particle sizes suitable for web formation. The process of further sizing the cellulose also helps to mix the combination of cellulose and bicomponent fiber. The processed web material is then typically transported pneumatically to one or more storage bins, out of which the material is metered into a forming head. The web material is then deposited by the forming head in a metered fashion onto a moving, air-permeable forming wire (or belt) to form a web or core. The means of depositing the web material involves sprinkling the material over a defined area of the forming belt so as to gradually form a web under the influences of gravity and of an air stream flowing down through the web into a suction box positioned beneath the forming belt. The web is then heated in an oven to cause an outer layer of the bicomponent fiber to melt or soften. The melted or softened outer layer of the bicomponent fiber contacts other fibers and cellulose particles and when re-hardened or cooled creates bonds.

If the bonding provided in the initial process is inadequate for the absorbent's intended use (as indicated, for example, by either unacceptably low tensile strength or a tendency to not remain intact when subjected to conditions typical of those for its intended use), the process may be modified to form a new web and the integrity of the new web can be increased by using a higher proportion of bicomponent fiber, or by increasing the amount of compression on the web either during or after the heating process.

Web compression, achieved by passing the web through a compression nip formed between a belt and a roller or between two rollers, can also be employed to increase web density. For some applications, the desirable properties of the web may be enhanced by reducing bulk.

If the process includes applying an outer scrim to one or both surfaces of the web core, the heating process causes at least a portion of the scrim to bond with the web core. If a scrim is applied to one surface, the scrim is typically applied to the top of the formed web before entering the oven or heating section. If scrims on both surfaces of the end product are desired, then the second scrim is positioned below the forming head such that the web is formed on top of the second scrim. As yet another alternative, the second or bottom scrim may be added after forming of the absorbent core, but before heating of the product in an oven.

There is also disclosed a non-woven product for use as an industrial absorbent, the product comprising a non-woven web core, the core having a first surface, a second surface opposite the first surface, and including a mixture of cellulose and bicomponent fibers or other bonding agent, at least some of the bonding agent being thermally bonded to at least some of the cellulose; and an air-permeable scrim having a first layer of a first material and a second layer a second material different from the first material. In a series of separate optional features which may be taken alone or in any combination: The first layer of the scrim may be thermally bonded to a surface of the core. The first layer of the air-permeable scrim may include spunbond material and the second layer may include meltblown material. The cellulose may treated with a liquid fire-retardant, and then dried prior to web formation. The first layer of the scrim may be formed from bicomponent fibers and the second layer may be formed from polypropylene. The second layer may a coefficient of friction that is greater than the coefficient of friction of the first layer. The second layer may be embossed. The first layer of the scrim may be bonded to the core and to the second layer of the scrim. The first layer of the scrim may be formed from spunbond bicomponent fibers and the second layer may be formed from meltblown polypropylene. The melting points of each of the first and second layers may be substantially the same as the melting point of the thermoplastic bonding agent. The thermoplastic bonding agent may comprise bicomponent fibers

### BRIEF DESCRIPTION OF THE DRAWINGS

Fig. 1 is a flow chart illustrating the process of manufacturing an absorbent product that includes a web.

Fig. 2 is a schematic view of the manufacturing line for the process of Fig. 1.

Fig. 3 is a perspective view of a web with a scrim made by the process in Fig. 1.
Fig. 3a is an enlarged view of a portion Fig. 3.

Fig. 4 is a cross-sectional view of the pad of Fig. 3, taken along line 4-4 of Fig. 3.
Fig. 4a is an enlarged view of a portion Fig. 4.

Fig. 5 is a perspective view of a web with two scrims made by the process in Fig. 1.
Fig. 5a is an enlarged view of a portion Fig. 5.

Fig. 6 is a cross-sectional view of the pad of Fig. 7, taken along line 6--6 of Fig. 5.
Fig. 6a is an enlarged view of a portion Fig. 6.

Fig. 7 is a perspective view of another web made by the process in Fig. 1.

Fig. 8 is a cross-sectional view of the pad of Fig. 7, taken along line 8--8 of Fig. 7.

Before any independent features and at least one construction of the invention are explained in detail, it is to be understood that the invention is not limited in its application to the details of construction and the arrangements of the components set forth in the following description or illustrated in the drawings. The invention is capable of other constructions and of being practiced or being carried out in various ways.

Although references may be made below to directions, such as upper, lower, downward, upward, rearward, bottom, front, rear, etc., in describing the drawings, these references are made relative to the drawings (as normally viewed) for convenience. Unless specifically indicated, these directions are not intended to limit the present invention in any form. In addition, terms such as "first" and "second" are used herein for purposes of description and are not, unless specifically stated, intended to indicate or imply a particular sequence or relative importance or significance.

### DETAILED DESCRIPTION

In one embodiment, the invention provides a dry-laid, industrial absorbent with core and a two-layer scrim. The core is a non-woven web that includes fibers and particles of scrap or recycled cellulose and bicomponent fiber. A chemical fire-retardant is applied to the cellulose in liquid form by means, for example, of a spray system prior to web formation. As discussed in more detail below, the cellulose is dried after being sprayed with a liquid fire-retardant and before being mixed with bicomponent fiber. The cellulose can be obtained from a number of different sources including a source of post-industrial cellulose (for example, scrap from a printing or paper making facility) and a source of post-consumer cellulose (for example, newsprint and similar paper recycled by individuals).

The scrim is an air-permable, thermoplastic scrim, having two sheets or layers (i.e., having a laminate configuration). The scrim is preferably continuous (i.e., not broken or separated into multiple pieces or lengths) and pre-formed (i.e., both layers of the scrim exist before the scrim is secured or bonded to the core. One layer is made from a spunbond material (for example, made from bicomponent fibers) and the other layer is a more textured surface. The function of the first layer is to adhere to the absorbent core, while the second layer provides a rougher, higher-grip surface, which provides a non-slip or reduced-slip function for the product while in use. The textured surface may be embossed, patterned, or printed for additional non-slip or aesthetic purposes.

In one form, the first layer of the scrim is a spunbond sheet generally made of bicomponent fibers. One type of bicomponent fibers useful in manufacturing the scrim have an inner core of polypropylene and a sheath or outer layer of polyethylene. The individuated bicomponent fibers within the web are generally of the same or similar composition as the bicomponent fibers used in the scrim. The outer sheath of polyethylene has a lower melting point than the core of polypropylene. In this form, an outer scrim layer is heated in an oven while in contact with a surface of the web such that melted or softened polyethylene in the bicomponent fibers of the scrim comes in contact with fibers and particles on a surface of the web. As the web and outer scrim layer or layers cool, the polyethylene in the scrim as well as in the individual bicomponent fibers within the web re-hardens to form bonding points with at least some adjacent particles and at least some adjacent fibers.

The second layer of the scrim is made of material other than spunbond material. In a particular embodiment, the second layer is made from meltblown polypropylene. The second layer of the scrim provides a rough outer surface for the product for proper surface adhesion (non-slip) of the product while in use. The two layers of the scrim are placed one on top of the other and then the scrim is then placed in contact with the material of the core. Specific manufacturing processes are described below. The components (the core and two-layer scrim) are heated in an oven and the two layers or the scrim thermally bond to each other and the scrim thermally bonds to the core, forming a through-bonded composite pad with a thermoplastic outer surface and an absorbent core. The rough outer surface can be further enhanced by thermal or ultrasonic embossing or patterning, to improve surface properties or the product aesthetics.

During development of the product, attempts were made to create a product with a single-layer scrim, for example, a scrim of meltblown material only. Also, experiments or trials with different types of meltblown materials were performed. The inventors discovered that meltblown materials did not, in general, adhere to the core of cellulose and bicomponent fiber sufficiently (i.e., so that the scrim would remain secured or bonded to the core when the absorbent was used as intended). It was also determined that meltblown material by itself did not provide sufficient additional strength and integrity to the web, which is one of the main purposes of having a scrim. It was also discovered that a meltblown only scrim was unable to withstand (i.e., would start to break or fall apart) stresses such as person walking on an absorbent with a meltblown only scrim. It was discovered, however, that a layer of meltblown, polypropylene could be adhered to a layer of spunbond bicomponent fibers. The layer of spunbond material adheres to the absorbent core and to the layer of meltblown material.

As noted above, the first layer of the scrim is most preferably made from spunbond bicomponent fibers and the first layer has a thickness of about 6 mils. The second layer is most preferably made from meltblown polypropylene and has a thickness of about 7 mils. The first and second layers (which both comprise layers of polymer materials) have similar melting points to each other and to the melting point of the outer sheath of the bicomponent fiber used in the absorbent core.

The layer of meltblown material has a higher natural adhesion or grip than the spunbond material. In particular, the inventors have found that the two-layer scrim described herein has (on the meltblown or outer side of the second layer) 1) a static coefficient friction of about 0.430 (as measured under the methodology set forth in ASTM D 1894 for plastic film and sheeting). This coefficient is approximately 20% higher than the static coefficient of friction of a single-layer scrim made solely from spunbond bicomponent fiber. The two-layer scrim also has a kinetic coefficient of friction of about 0.448 (again, under ASTM D 1894), which is about 40% higher than the kinetic coefficient friction of the single-layer scrim. In particular, a single-layer scrim of spunbond bicomponent fiber has a static coefficient of friction of about 0.354 and a kinetic coefficient of friction of about 0.316.

The two layer scrim is air permeable so air may flow freely during forming of the absorbent core and so that heated air can pass through the web of cellulose and bicomponent fiber when the scrim and core are heated to form the final product. Preferably, the two layer scrim has an air permeability of about 120 to about 240 cfm (cubic feet per minute).

In another form, the absorbent product includes a netting configured with approximately 2 to 5 lines (or threads) per inch that is made of plastic which does not significantly soften or melt in the when heated (under typical conditions). The netting is attached to the product by being to some degree embedded within the core. In other forms, the netting may also be made of material which softens or melts to form bonding points with the material of the web. In such constructions, the netting adheres to the core through thermal bonding and is only slightly embedded in the web.

The method of web formation and processing accommodates a wide range of cellulose particle sizes and provides the opportunity to produce a finished web with a relatively high bulk-to-weight ratio of between 20 and 30 mils/osy (thousands of an inch per ounces per square yard). For absorbent webs, a high bulk (low density) helps to achieve a relatively high absorbency of between 11 and 15 times web weight, depending in part on the properties of the absorbed liquid. The cellulose particles in the web can vary in size from that of fines to considerably larger pieces, as can pass through a hammer mill screen with openings typically between 0.2" and 0.3" wide.

A high-bulk finished product is achieved by a method that does not require mechanical compression of the unbonded web material in order to form a web. The forming head sprinkles web material onto a steadily advancing forming belt where it forms a web under no more compression force than that resulting from gravity and the downward flow of air through both the web and the forming belt, the air flow being generated by a suction fan, the inlet of which is connected to a suction box positioned beneath the forming belt.

If needed or desired to encourage the formation of bonds between bicomponent fibers and particles of cellulose, some amount of compression may be applied to the web after being heated in the oven, the compression typically being accomplished by means of an adjustable gap between two rollers. The amount of compression applied varies inversely with the size of the gap, which is adjusted on the basis of the desired strength and density of the web.

The strength and density of the web also tend to vary in relation to the amount of individuated bicomponent fibers in the web. In one independent embodiment, the web includes about 8% to 12% of staple bicomponent fibers by total web weight. The bicomponent fibers are crimped and approximately ¼" long. In general, the higher the proportion of bicomponent fiber, the stronger and denser the finished product. However, when the finished product is stronger and denser, the finished product is also less absorbent and less insulating. At least one, two-layer scrim is attached to the core of cellulose and bicomponent fiber. In some embodiments, the absorbent includes a second scrim, netting, or both.

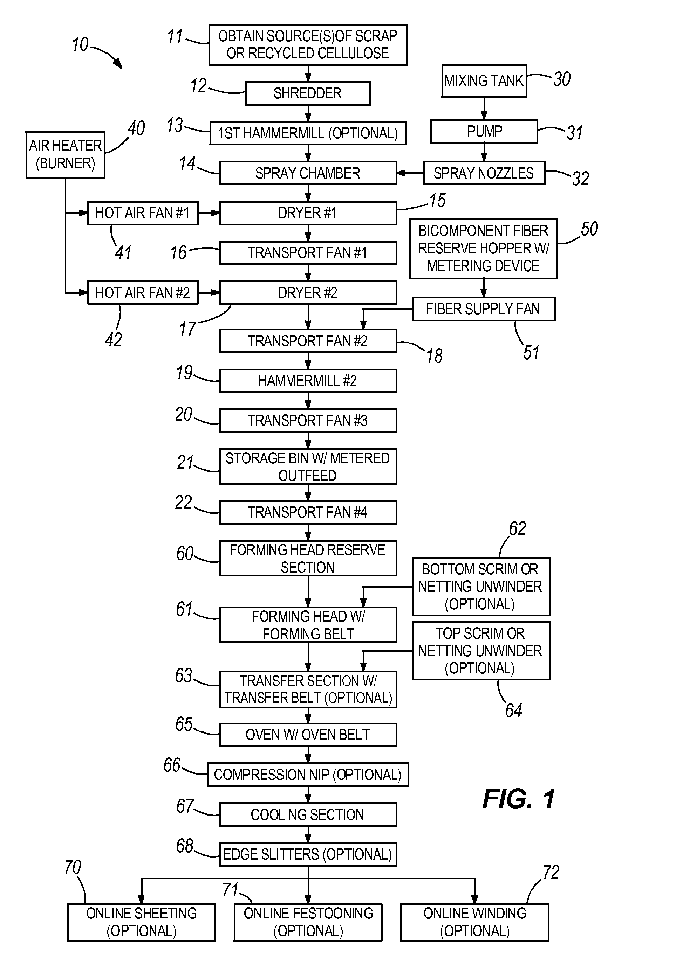

Fig. 1 illustrates a process 10 for manufacturing an absorbent product. In the process 10, a dry-laid, fire-retarded, thermally bonded web comprised of particles of scrap or recycled cellulose, bicomponent fiber, and fire-retarding chemicals is formed. As noted, the fire retardant process is not necessary if a non-fire retardant absorbent is acceptable for the end use for which the absorbent will be used. The process 10 begins at step or block 11 in which cellulose from a variety of sources, including those described above, is obtained. The cellulose is then processed through a shredder (block 12), which, depending on the type of shredder and the properties of the scrap or recycled cellulose, may tend to produce densified or compacted clumps of material.

Before entering the spray chamber (block 14), the shredded pieces of cellulose must be small enough and of low enough density to permit a sufficiently rapid absorption of sprayed, liquid fire retardant, given the desired throughput, the allowable time for absorption, and the desired level of fire retardancy. If necessary to achieve the suitable range of sizes and densities, the clumps and pieces of cellulose exiting the shredder are processed through a first hammer mill (block 13) which declumps and generally reduces the cellulose to sizes ranging from fines to pieces up to 3" to 4" in length. The first hammer mill is optional in that some types of shredders may reduce the cellulose to non-compacted pieces within a similar size range without requiring further processing.

After exiting the shredder and, optionally, the first hammer mill, the processed cellulose is then pneumatically transported through a series of devices in an air stream generated by the series arrangement of three transport fans: transport fan #1 (block 16), transport fan #2 (block 18), and transport fan #3 (block 20). The transport fans provide a motive force to move the processed cellulose along the series of devices.

The cellulose is drawn by the air stream through a spray chamber (block 14) where it is sprayed with a liquid fire-retardant. One manner of applying fire retardant to the cellulose that may be useful in embodiments of the present invention is described in U.S. Patent No. 5,534,301, the entire contents of which is hereby incorporated by reference.

In one independent embodiment, the liquid fire-retardant comprises water into which boric acid and ammonium sulfate have been added to just below their respective saturation levels in water at approximately 77 degrees Fahrenheit. The liquid fire-retardant is mixed in a mixing tank (block 30) and then supplied to spray nozzles (block 32) by a volumetric pump (block 31). The spray nozzles are arranged so as to provide sufficient opportunity for cellulose passing through the spray chamber to absorb the desired amount of liquid fire-retardant. Approximately 25 to 40 gallons of fire-retardant are sprayed into the spray chamber for approximately every 1000 lbs. of processed cellulose.

After being sprayed with a liquid fire-retardant, the cellulose is dried by passing through a first drying chamber (block 15), into which hot air fan #1 (block 41) injects heated air generated by an air heater (block 40), such as a gas burner. The spray chamber (block 14) and first dryer (block 15) are arranged so as to allow adequate time for the liquid fire-retardant to be absorbed by the cellulose prior to being subjected to heated air. The heated air injected into dryer #1 (block 15) is limited in temperature and volume to avoid excessively rapid drying of the cellulose, which, if not avoided, may prevent adequate absorption by the cellulose of the fire-retardant chemicals.

The cellulose is then transported in the air stream into a second dryer (block 17). Heated air injected into the second dryer by hot air fan #2 (block 42) from an air heater (block 40) is sufficient to complete the process of driving water out of the cellulose. The dried cellulose exits the second dryer (block 17) and enters transport fan #2 (block 18).

Bicomponent fiber is stored in and metered at a controlled rate from a reserve hopper (block 50) into a fiber supply fan (block 51), which introduces the bicomponent fiber into the inlet of transport fan #2 (block 18). The fire-retardant treated cellulose along with the bicomponent fiber is then transported to the second hammer mill (block 19), in which the cellulose is further reduced in size and mixed with the bicomponent fiber. The mixture of bicomponent fiber and cellulose (the web material) is then carried through transport fan #3 (block 20) to a storage bin (block 21).

The storage bin (block 21) is equipped with a metering mechanism by which processed web material can be fed at a controlled rate into transport air fan #4 (block 22), which carries the material to the forming head chute or reserve section (block 60). The reserve section (block 60), situated on top of the forming head (block 61), meters web material at a controlled rate into the forming head.

The forming head (block 61) disperses and deposits the web material over a defined area of the advancing forming belt (included in block 61) to gradually form the pre-bonded web. A forming head suitable for use in making the web is described in U.S. Patent No. 7,627,933, the entire contents of which is hereby incorporated by reference.

If included in the embodiment, a bottom layer of scrim is unwound from a first unwinder (block 62) and carried under the forming head on top of the forming belt. The web is then formed on top of the bottom scrim.

If included in the embodiment, a layer of netting is unwound from a first unwinder (block 62) and carried under the forming head, and, for some distance while under the forming head, above the forming belt. Some amount of web material thereby falls through the netting, causing the netting to become to some extent embedded within the web.

If included in the embodiment, a top layer of scrim is unwound from a second unwinder (block 64) and carried on top of the web either while the web is still on the forming belt after the forming head, or while the web transitions from the forming belt (included in block 61) to the transfer belt (included in block 63).

The transfer section (block 63) includes structure for transferring the web from the forming belt to the oven belt (included in block 65). The transfer section is not required in all instances.

The web is conveyed from the transfer section (block 63) to the oven (block 65), where it is heated sufficiently to cause the melting or softening of the polyethylene in the individuated bicomponent fibers, and, if provided, in the scrim layer(s). Molten or softened polyethylene in contact with other fibers or particles of cellulose in the web may create bonds when the polyethylene is cooled and hardened. As the web exits the oven, it may be taken through an optional compression nip (block 66) in order to squeeze the web for the purpose of encouraging thermal bonds and possibly to intentionally reduce the bulk of the finished product. The web is then cooled in a cooling section (block 67) in order to set the thermal bonds.

Different methods and devices for online converting may then be employed to produce the desired form of the finished product. Fig. 1 illustrates a number of possible alternatives, including an edge slitter (block 68) for trimming the edges of the web to a fixed width. Also illustrated after the edge slitter (block 68) are three converting alternatives for sheeting (block 70), festooning (block 71) or winding (block 72) the finished web.

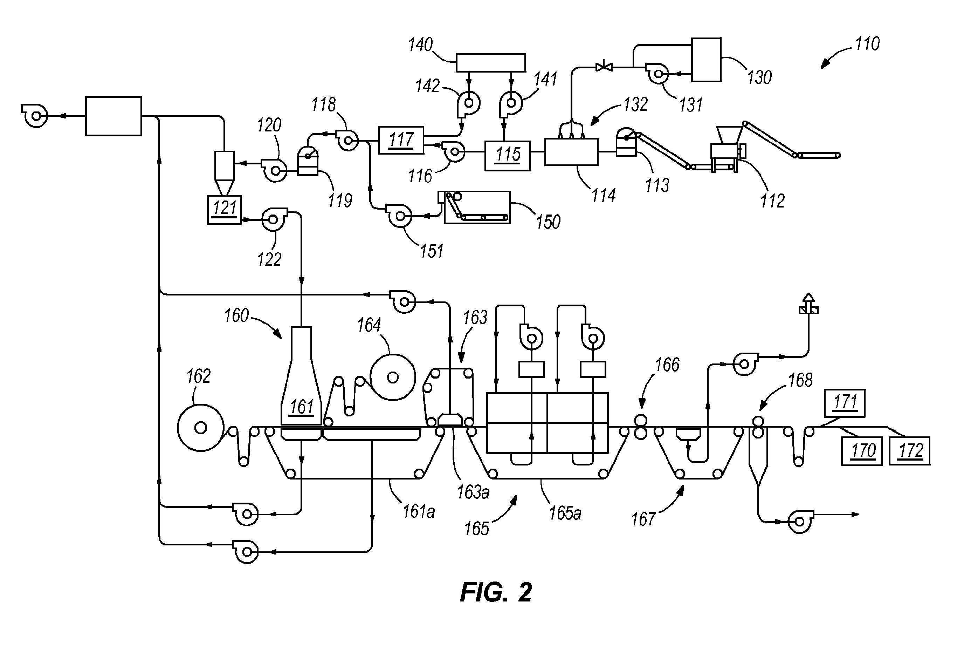

Fig. 2 is a schematic view of the manufacturing line 110 for the process 10 shown in Fig. 1 and described above. In Fig. 2, structure of the manufacturing line 110 corresponding to a step or block in the flow chart of Fig. 1 has the same reference number in the "100" series.

In the manufacturing line 110, the cellulose obtained from one or more sources is processed through a shredder 112, which, depending on the type of shredder and the properties of the scrap or recycled cellulose, may tend to produce densified or compacted clumps of material.

Before entering a spray chamber 114, the shredded pieces of cellulose must be small enough and of low enough density to permit a sufficiently rapid absorption of sprayed liquid fire-retardant, given the desired throughput, the allowable time for absorption, and the desired level of fire-retardancy. If necessary to achieve the suitable range of sizes and densities, the clumps and pieces of cellulose exiting the shredder 112 are processed through a first hammer mill 113 which declumps and generally reduces the cellulose to sizes ranging from fines to pieces up to 3" to 4" in length. The first hammer mill 113 is optional in that some types of shredders 112 may reduce the cellulose to non-compacted pieces within a similar size range without requiring further processing.

After exiting the shredder 112 and, optionally, the first hammer mill 113, and the spray chamber 114, the processed cellulose is then pneumatically transported through a series of devices in an air stream generated by the series arrangement of three transport fans: a first transport fan 116, a second transport fan 118, and third transport fan 120. The transport fans 116, 118 and 120 provide a motive force to move the processed cellulose along the series of devices.

The cellulose is drawn by the air stream through the spray chamber 114 where it is sprayed with a liquid fire-retardant. As noted, one manner of applying fire retardant to the cellulose that may be useful in embodiments of the present invention is described in U.S. Patent No. 5,534,301.

As also noted, the liquid fire-retardant comprises water into which boric acid and ammonium sulfate have been added. The liquid fire-retardant is mixed in a mixing tank 130 and then supplied to spray nozzles 132 by a volumetric pump 131. The application of the fire retardant be performed in substantially the same manner as described above.

After being sprayed with a liquid fire-retardant, the cellulose is dried by passing it through a first drying chamber 115, into which a first hot air fan 141 injects heated air generated by an air heater 140, such as a gas burner. The spray chamber 114 and the first dryer 115 are arranged so as to allow adequate time for the liquid fire-retardant to be absorbed by the cellulose prior to being subjected to heated air. The heated air injected into the first dryer 115 is limited in temperature and volume to avoid excessively rapid drying of the cellulose, which, if not avoided, may prevent adequate absorption by the cellulose of the fire-retardant chemicals.

The cellulose is then transported in the air stream into a second dryer 117. Heated air injected into the second dryer by a second hot air fan 142 from the air heater 140 is sufficient to complete the process of driving water out of the cellulose. The dried cellulose exits the second dryer 117 and enters the second transport fan 118.

Bicomponent fiber is stored in and metered at a controlled rate from a reserve hopper 150 into a fiber supply fan 151, which introduces the bicomponent fiber into the inlet of the second transport fan 118. The fire-retardant treated cellulose along with the bicomponent fiber is then transported to a second hammer mill 119, in which the cellulose is further reduced in size and mixed with the bicomponent fiber. The mixture of bicomponent fiber and cellulose (the web material) is then carried through the third transport fan 120 to a storage bin 121.

The storage bin 121 is equipped with a metering mechanism (not shown in detail) by which processed web material can be fed at a controlled rate into a fourth transport air fan 122, which carries the material to the forming head chute or reserve section 160. The reserve section 160, situated on top of the forming head 161, meters web material at a controlled rate into the forming head 161.

The forming head 161 disperses and deposits the web material over a defined area of the advancing forming belt 161*a* to gradually form the pre-bonded web. As noted, the forming head 161 may be configured as described in U.S. Patent No. 7,627,933.

If included in the embodiment, a bottom layer of scrim is unwound from a first unwinder 162 and carried under the forming head 161 on top of the forming belt 161*a*. The web is then formed on top of the bottom scrim.

If included in the embodiment, a layer of netting is unwound from the first unwinder 162 and carried under the forming head 161, and, for some distance while under the forming head 161, above the forming belt 161*a*. Some amount of web material thereby falls through the netting, causing the netting to become to some extent embedded within the web.

If included in the embodiment, a top layer of scrim is unwound from a second unwinder 164 and carried on top of the web either while the web is still on the forming belt after the forming head 161, or while the web transitions from the forming belt 161*a* to a transfer belt 163*a*.

A transfer section 163 includes structure for transferring the web from the forming belt 161*a* to an oven belt 165*a*. Such structure may include a belt, such as the transfer belt 163*a*, a conveyor, other transport structure, etc.

The web is conveyed from the transfer section 163 to an oven 165, where it is heated sufficiently to cause the melting or softening of the polyethylene in the individuated bicomponent fibers, and, if provided, in the scrim layer(s). Molten or softened polyethylene in contact with other fibers or particles of cellulose in the web may create bonds when the polyethylene is cooled and hardened. As the web exits the oven 165, it may be taken through an optional compression nip 166 in order to squeeze the web for the purpose of encouraging thermal bonds and possibly to intentionally reduce the bulk of the finished product. The web is then cooled in a cooling section 167 in order to set the thermal bonds.

Different methods and devices for online converting may then be employed to produce the desired form of the finished product. Fig. 2 illustrates a number of possible alternatives, including an edge slitter or trimmer 168 for trimming the edges of the web to a fixed width. After the edge slitter 168, converting alternatives are provided for sheeting 170, festooning 171 or winding 172 the finished web.

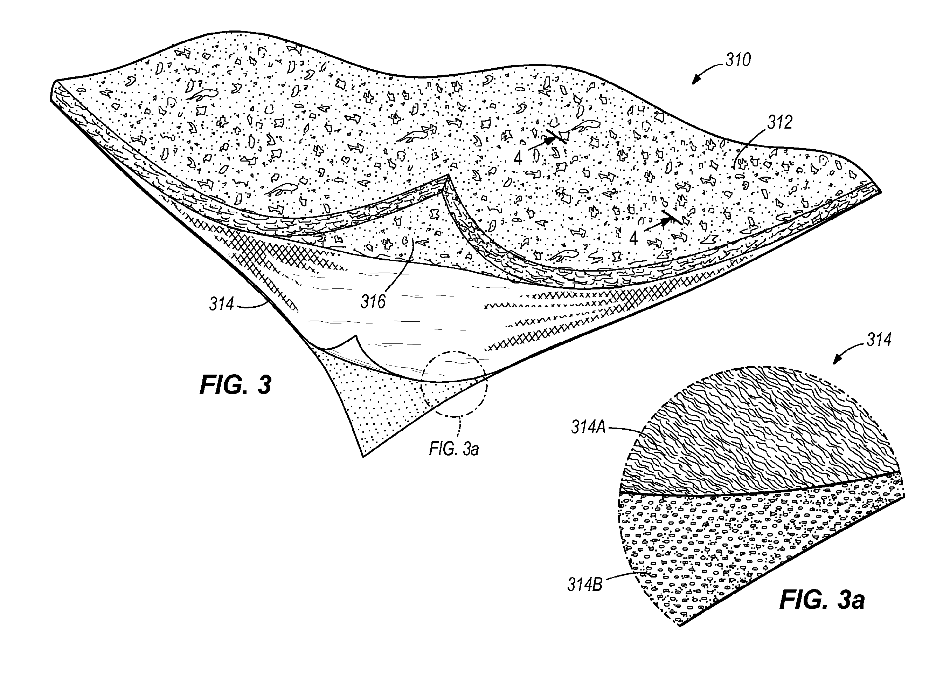

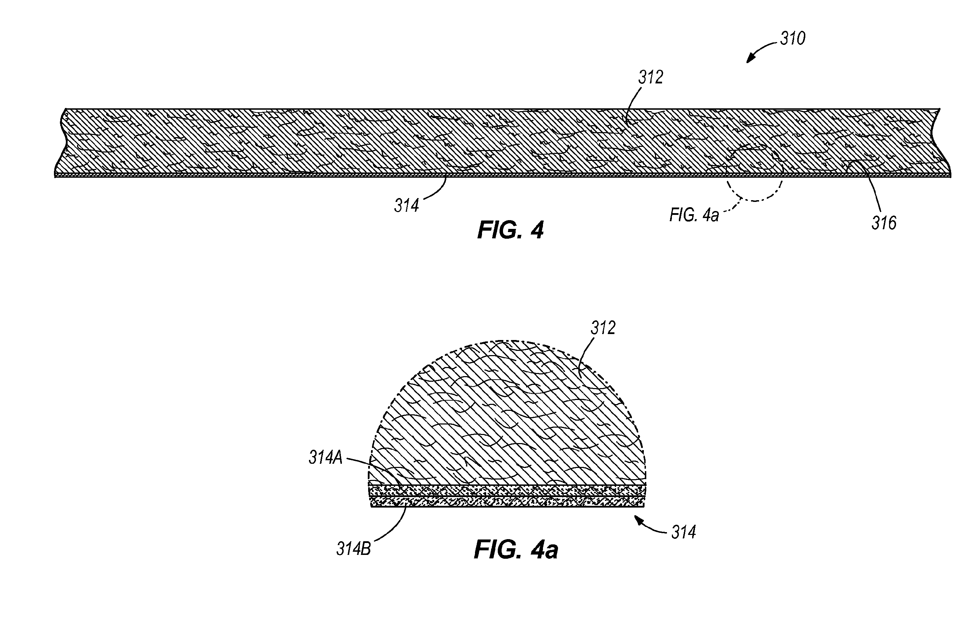

Figs. 3, 3a, 4, and 4a show a pad 310 (or industrial absorbent) that includes a core of cellulose and bicomponent fiber 312 and a scrim 314. The scrim includes a first layer 314A made of first material. As noted above, the first material is most preferably a sheet of spunbond bicomponent fibers. The scrim 314 also has a second layer 314B made of second material. As noted above, the second layer is most preferably a sheet of meltblown polypropylene.

A scrim made of a single layer of material is, in most cases translucent and, while never as transparent as, for example, window glass, in some cases almost transparent. In contrast, the scrim 314, while letting some light to pass through, is generally opaque. The opaque nature of the scrim 314 offers aesthetic advantages to the pad 310.

There are number of different ways in which the scrim 314 may be made. However, one technique involves manufacturing the first sheet or layer 314A using spunbond techniques and separating manufacturing the second sheet or layer 314B using meltblown techniques. The two layers are then thermo-calendered together and wound on a roll. The scrim 314 (as a laminate) is then unrolled and secured to a surface 316 of the pad 310. The scrim 314 can be positioned under the cellulose and bicomponent fiber 312, such as in step 62, or can be positioned above the cellulose and bicomponent fiber 312, such as in step 64. When only one scrim 314 is used, it may be desirable to position the scrim 314 below the cellulose and bicomponent fiber 312, to ease movement along the forming belt 161*a*.

When the pad 310 is directed through the oven 165, the bicomponent fibers 312 can also partially melt and adhere to the scrim 314, to secure the scrim 314 to the pad 310. In another construction, the scrim 314 can at least partially melt in the oven 165. In some constructions, the scrim 314 can be pressed against the pad 310 by nip roller 166. The scrim 314 increases the strength of the pad 310 without decreasing or substantially decreasing the absorbent and insulating properties of the pad 310.

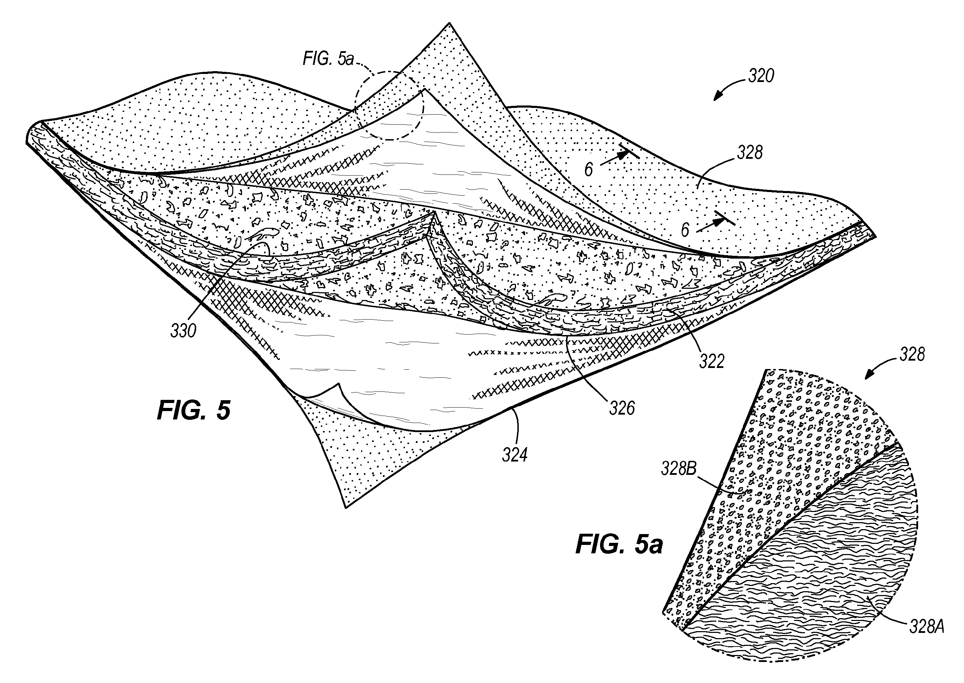

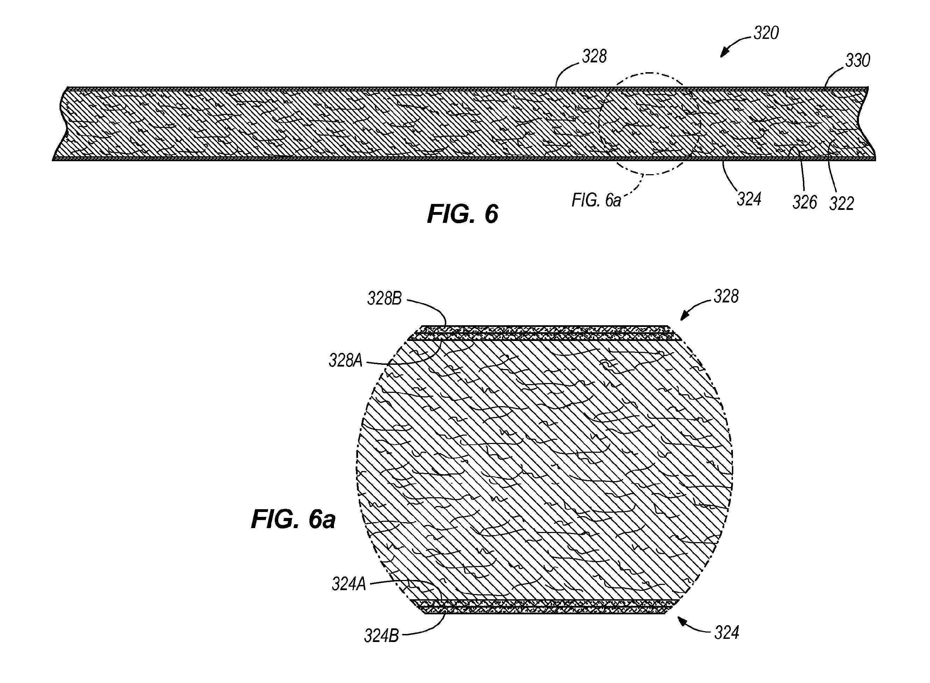

Figs. 5, 5a, 6, and 6a show a pad 320 that includes a core of cellulose and bicomponent fiber 322, a first scrim 324, positioned on a first pad surface 326, and a second scrim 328, positioned on a second pad surface 330. The first scrim 324 can be applied to the pad 320 in a similar way as the scrim 314 is applied to the pad 310. The second scrim 328 is positioned on the second pad surface 328 after the cellulose and bicomponent fiber 322 is positioned on the first scrim 324, such as at step 64.

The first and second scrims 324, 328 are bonded to the pad 320 when the pad 320 is moved through the oven 165. The melting bicomponent fibers 322 also adhere to the scrims 324, 328 and form a bond when cooled. As discussed above, the nip roller 166 can press the pad 320 to further bond the scrims 324, 328 to the cellulose and bicomponent fiber 322. The scrims 324, 328 increase the strength of the pad 320 without significantly decreasing the absorbent and insulating properties of the pad 320.

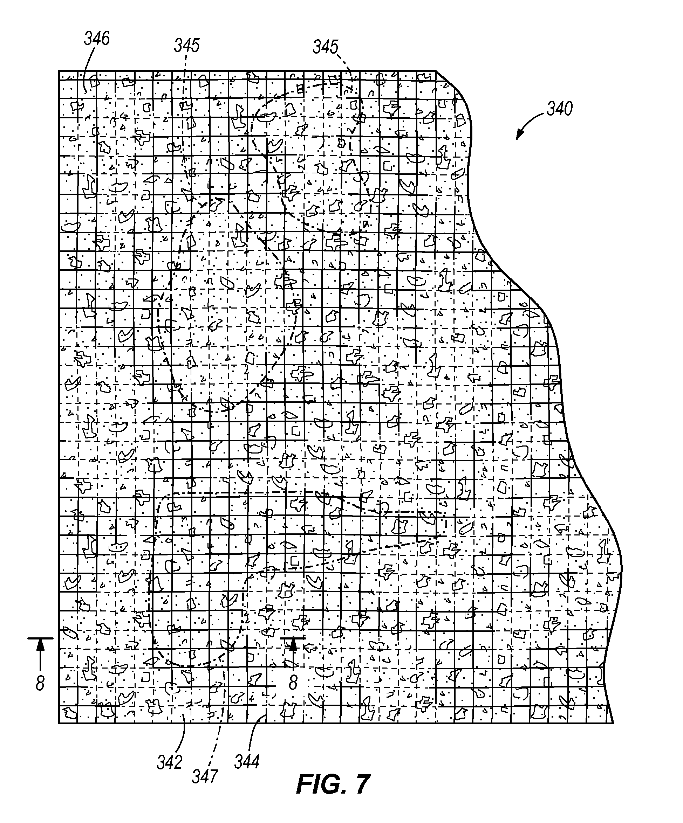

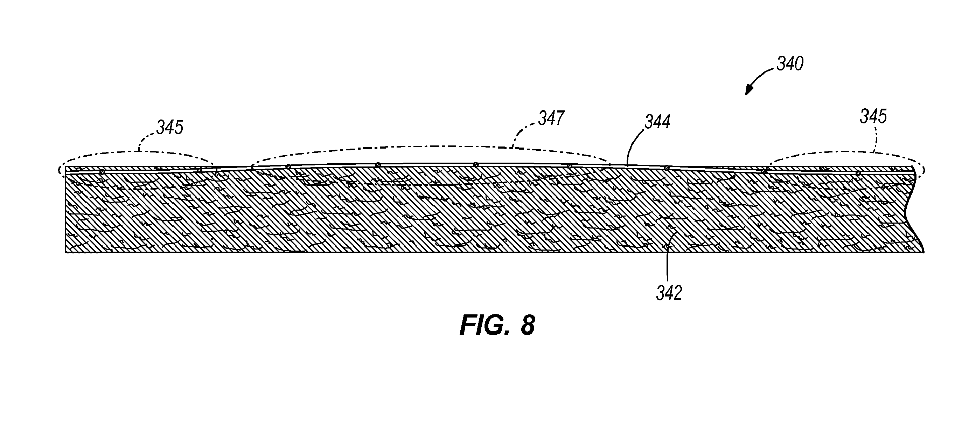

Figs. 7 and 8 show a pad 340 that includes cellulose and bicomponent fiber 342 and netting 344. As mentioned above, step 62 includes providing the optional netting. The netting 344 is unrolled from the unwinder 162 and held above the forming belt 161*a* for a distance (see Fig. 2), such that some of the cellulose and bicomponent fiber 342 fall through the netting 344. The netting 344 is then lowered onto the forming belt 161*a* and onto any cellulose and bicomponent fiber 342 that has fallen through the netting 344. The netting 344 is at least partially embedded in the web material. For example, in the embodiment shown in Fig. 7, the pad 340 includes multiple areas 345 where the netting 344 is visible on a top surface 346 of the pad. The pad 340 also includes multiple areas 347 where the netting 344 is not visible on the top surface 346 (as is shown by phantom lines). In other constructions, the nettings 344 can be more embedded or less embedded in the web material, depending upon, among other things, the size of netting 344 used and the average particle size of the cellulose and bicomponent fiber 342.

The pad 340 is directed through the oven 165, as described above. The individuated bicomponent fibers 342 melt in the oven 165 and bond with the cellulose fibers. In the illustrated construction, the netting 344 does not have any adhesive properties, nor does the illustrated netting 344 melt in the oven 165. Rather, the netting 344 is secured to the pad 340 because the netting 344 is at least partially embedded in the web material. Some of the cellulose and bicomponent fiber 342 is positioned on opposite sides of the netting 344 when the pad 340 is sent through the oven 165 and the web material forms bonds around the netting 344. A nip roller 166 can be used to compress the pad 340, and further secure the netting 344 to the cellulose and bicomponent fibers 342. The netting 344 increases the strength of the pad 340, without decreasing or substantially decreasing the absorbency and/or insulation properties of the pad 340.

In another construction (not shown), the netting 344 may be fully embedded into the pad 340, such that the netting 344 is not visible through the cellulose and bicomponent fiber 342. In yet another construction (not shown), netting 344 may be included on both a top and a bottom of the pad 340. Further, in another construction (not shown), the netting 344 may have adhesive properties and/or may soften or melt when the pad 340 is sent through the oven 165 to at least partially bond with the web material.

As should be apparent from the above, embodiments of the invention provide, among other things, absorbent with enhanced grip and methods of manufacturing the same. One or more features, independent advantages, and independent embodiments of the invention are set forth in the following claims.

## Claims

1. A non-woven product for use as an industrial absorbent, the product comprising:
a non-woven web core, the core having a first surface, a second surface opposite the first surface, and including a mixture of
at least one of scrap and recycled cellulose, the cellulose being selected from at least one of a group of sources including a source of post-industrial cellulose and a source of post-consumer cellulose, and
bicomponent fibers, at least some of the bicomponent fibers being thermally bonded to at least some of the cellulose;
an air-permeable scrim having a first layer including spunbond material and a second layer including meltblown material, the first layer of the scrim thermally bonded to the the first surface or second surface of the core.

2. The non-woven product as claimed in claim 1, wherein the cellulose is treated with a liquid fire-retardant, and then dried prior to web formation.

3. The non-woven product as claimed in claim 1 or claim 2, wherein the first layer of the scrim is formed from bicomponent fibers and the second layer is formed from polypropylene.

4. The non-woven product of any one of the preceding claims, wherein the first layer of the scrim has a coefficient of friction and the second layer has a coefficient of friction that is greater than the coefficient of friction of the first layer.

5. The non-woven product as claimed in any one of the preceding claims, wherein the second layer is embossed.

6. The non-woven product as claimed in any one of the preceding claims, wherein the first layer of the scrim is bonded to the core and to the second layer of the scrim.

7. A non-woven product for use as an industrial absorbent, the product comprising:
a non-woven web core, the core having a first surface, a second surface opposite the first surface, and including a mixture of
cellulose, and
a thermoplastic bonding agent, at least some of the thermoplastic bonding agent being thermally bonded to at least some of the cellulose;
an air-permeable scrim having a first layer including a first material and having a coefficient of friction and a second layer of a second material that is different from the first material and having a coefficient of friction that is greater than the coefficient of friction of the first material.

8. The non-woven product as claimed in claim 7, wherein the cellulose is treated with a liquid fire-retardant, and then dried prior to web formation.

9. The non-woven product as claimed in claim 7 or claim 8, wherein the first layer of the scrim is formed from spunbond bicomponent fibers and the second layer is formed from meltblown polypropylene.

10. The non-woven product as claimed in any one of claim 7 to claim 9, wherein the second layer is embossed.

11. The non-woven product as claimed in any one of claim 7 to claim 10, wherein the first layer of the scrim has a melting point, and the second layer of the scrim has a melting point, and the melting points of each of the first and second layers are substantially the same as a melting point of the thermoplastic bonding agent.

12. The non-woven product as claimed inany one of claim 7 to claim 9, wherein the thermoplastic bonding agent comprises bicomponent fibers.
